# EUROPEAN PATENT SPECIFICATION

(11) **EP 1 747 129 B1**
(45) Date of publication and mention of the grant of the patent: **16.07.2008**
(21) Application number: 05746393.7
(22) Date of filing: 10.05.2005
(51) Int. Cl.: B60T 8/00, B64C 25/42

(54) **HYDRAULIC FLUID CONTROL APPARATUS**
VORRICHTUNG ZUR STEUERUNG VON DRUCKFLÜSSIGKEIT
APPAREIL DE COMMANDE A FLUIDE HYDRAULIQUE

(30) Priority: 12.05.2004 GB 0410620
(43) Date of publication of application: 31.01.2007
(73) Proprietor: Meggitt Aerospace Limited, Coventry CV6 4AA (GB)
(72) Inventor: MILLER, Richard John, Coventry, West Midlands CV3 6LY (GB)
(74) Representative: Moore, Christopher Mark
(86) International application number: PCT/GB2005/001753
(87) International publication number: WO 2005/110828

(56) References cited:
- EP-A- 0 329 373
- EP-A- 0 936 116
- EP-B- 1 080 009
- US-A- 4 610 484

## Description

### FIELD OF THE INVENTION

The present invention relates to aircraft braking system hydraulic fluid control apparatus.

### BACKGROUND TO THE INVENTION

The high cost of aircraft development means that development programs for new aircraft need high production numbers and/or selling price to justify investment levels required. There are many niche applications for small numbers of aircraft, for which investment in a new aircraft is difficult to justify. However, aging aircraft that currently fill many of these niche functions are operating with equipment that can be obsolete or inefficient, because of the outdated technology employed. Such equipment can include engines and ancillary equipment, avionics, landing gear and control systems.

An increasing trend in aviation is the updating of proven airframe designs with modern equipment to provide an updated, more efficient aircraft that utilises current technology without the cost associated with development of a completely new aircraft. Some older airframes that are now being refurbished and re-equipped for a new life span were originally designed for braking systems employing sintered friction materials. These aircraft are now being equipped with modern braking systems. An example of such an aircraft is the Nimrod MRA4 built by BAE Systems Limited of Great Britain. However, one drawback of this approach is the accommodation of the performance parameters of modern systems on the existing airframe, in particular the torque generated by the braking system.

Modern aircraft braking systems are designed around the use of carbon-carbon composite friction materials that have a significantly higher peak torque during a braking cycle than sintered materials. If the brake torque available from such modern braking systems is allowed to build too quickly and/or exceed certain threshold values when the brake is applied, it is possible to cause damage to the airframe.

Possible solutions to this problem are seen in EP 1080009, which teaches (see Fig. 7 thereof) increasing brake pressure in stages according to pedal displacement. Other approaches are seen in EP 0329373, where brakes may be selectively disabled, or in EP 0936116 comprising a limiter to limit the maximum brake control signal to avoid damage to the brake actuators and/or assemblies.

Brake control on aircraft employing such airframes refurbished with braking systems that use carbon-carbon composite friction materials has been carried out by the use of complex systems within hydro-mechanical brake pressure control valves designed to control brake torque to avoid damage to the airframe. Typically, a pressure reducing valve, under the control of a utilities systems management system, feeds hydraulic fluid under pressure to brake metering valves, anti-skid valves and hydraulic fuses downstream of the pressure reducing valve. The pressure reducing valve controls the build up of a pressure profile in response to a brake signal received by the pressure reducing valve, the pressure to the brakes being increased over a pre-determined time from a starting pressure to some peak value during braking whereafter the pressure is released when the brake application has been completed. The functionality of the pressure reducing valve is provided mechanically by, for example, the use of a restrictor to limit the flow of hydraulic fluid and an accumulator. With this arrangement, the pressure profile build-up is dependent on the restrictor size and accumulator volume.

### SUMMARY OF THE INVENTION

The invention provides an aircraft braking system hydraulic fluid control apparatus for replacing a pressure reducing valve of an aircraft braking system, the apparatus comprising electrical control circuitry for receiving an input signal representative of a brake demand and generating an electrical control signal in response thereto and means for variably controlling a hydraulic output in response to the electrical control signal, the means for variably controlling a hydraulic output being coupled to the electrical control circuitry for receiving said electrical control signal, wherein said electrical control circuitry is operable to generate a pre-programmed electrical control signal profile according to airframe properties of an aircraft to which, in use, the apparatus is fitted irrespective of said input signal to cause said means for variably controlling a hydraulic output to provide a predetermined hydraulic output profile when a hydraulic output corresponding to said brake demand would exceed one or more thresholds corresponding to predetermined pressure profile limits associated with said airframe properties.

Preferably said electrical control circuitry comprises an electronic control unit.

Preferably said electronic control unit is a programmable processing unit, whereby the electrical control signals generated are configurable by reprogramming the processing unit such that the hydraulic output from the means for variably controlling a hydraulic output can be adjusted by reprogramming the processing unit.

Preferably at least one of the control circuitry and the means for variably controlling a hydraulic output is powered by the input signal.

Preferably the means for variably controlling a hydraulic output is a servovalve.

Preferably the means for variably controlling a hydraulic output is arranged to control, when in use, at least one of hydraulic pressure and hydraulic flow.

The invention also includes an aircraft braking system having a pressure reducing valve, the method comprising:
coupling a means for variably controlling a hydraulic output in response to an electrical control signal between a source of hydraulic fluid under pressure and a braking assembly of an aircraft braking system, the means for variably controlling a hydraulic output being provided in place of said pressure reducing valve;
providing electrical control circuitry for receiving, when in use, an input signal representative of a brake demand and generating a pre-programmed electrical control signal profile in response thereto; and
coupling the electrical control circuitry to the means for variably controlling a hydraulic output, such that the means for variably controlling a hydraulic output is arranged to control, when in use, supply from the source of hydraulic fluid in response to the pre-programmed electrical control signal profile from said electrical control circuitry.

Preferably said electrical control circuitry comprises a programmable processing unit and further comprising programming said programmable processing unit to generate electrical control signals that will cause the means for variably controlling a hydraulic output to control supply from the source of hydraulic fluid to provide pressure profiles that are within a predetermined pressure profile limit acceptable to an airframe of an aircraft to which the braking system is fitted even when the brake demand is for a pressure profile exceeding said predetermined pressure limit.

Preferably said programming comprises providing a pressure profile having a maximum pressure acceptable to the airframe.

### BRIEF DESCRIPTION OF THE DRAWINGS

An embodiment of the invention will now be described, in a non-limiting manner by way of example only, with reference to the drawings, in which:
Figure 1 is a schematic diagram of an aircraft braking system comprising an aircraft braking system hydraulic fluid control apparatus according to an embodiment of the invention; and
Figures 2A to 2D are schematic diagrams showing signal and pressure profiles.

### DETAILED DESCRIPTION OF A PREFERRED EMBODIMENT

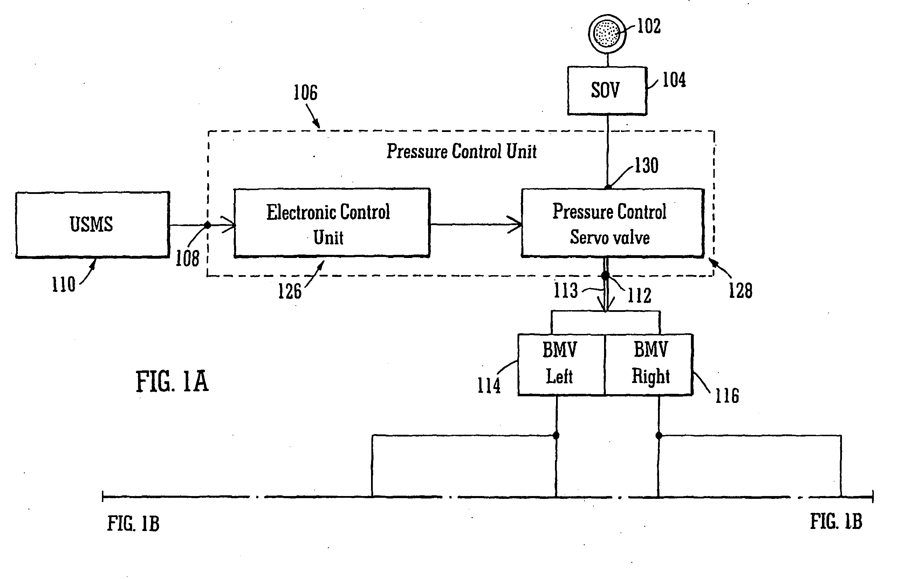

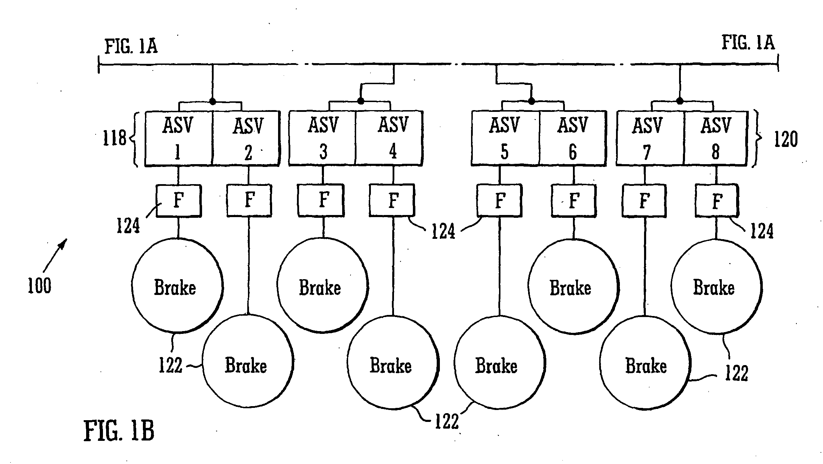

Referring to Figure 1, an aircraft braking system 100 comprises a source of hydraulic pressure 102 coupled to a Shut-Off Valve (SOV) 104, the SOV 104 being coupled to an aircraft braking system hydraulic fluid control apparatus comprising a Pressure Control Unit 106. The Pressure Control Unit 106 comprises an electronic control unit 126 comprising a suitably programmed processing unit coupled to a Utility Systems Management System (USMS) 110 via an input 108. Although a programmed processing unit is preferred for providing an electronic control, it will be understood that the programmed processing unit can be replaced by other electronic circuitry and/or software.

The Pressure Control Unit 106 has a hydraulic fluid output port 112 that is coupled to a first Brake Metering Valve (BMV) 114 and a second BMV 116 by a brake systems hydraulic line 113. The first and second BMVs 114, 116 are coupled to a first set of Anti-Skid Valves (ASVs) 118 and a second set of ASVs 120, respectively. Each ASV 120 is coupled to a corresponding brake assembly 122 via a respective hydraulic fuse 124.

As shown in Figure 1, the input to electronic control unit 126 constitutes the input 108 of the Pressure Control Unit 106. The electronic control unit 126 provides electrical control signals *via* an output thereof coupled to an input of a Pressure Control Servovalve 128. The Pressure Control Servovalve 128 has an input port 130, constituting a hydraulic fluid input port of the Pressure Control Unit 106 and an output port constituting the hydraulic fluid output port 112.

In this embodiment, the electronic control unit 126 and the Pressure Control Servovalve 128 are formed as a single unit; namely the Pressure Control Unit 106. However, it should be appreciated that the electronic control unit 126 and Pressure Control Servovalve 128 can be provided as separate units.

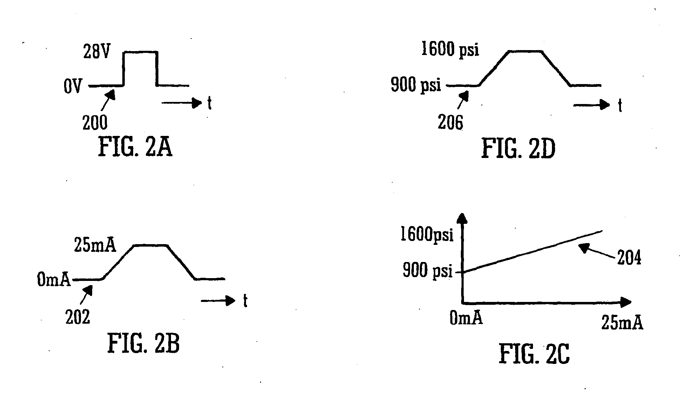

Referring to Figure 2, in operation of the aircraft braking system 100, a braking demand originates, for example, from a pilot The braking demand is translated into an electrical braking demand signal. The braking demand signal is received by the USMS 110 in addition to other signals representative of factors pertinent to braking; for example aircraft weight and/or speed. The USMS 110 executes a number of algorithms in order to generate a brake trigger signal 200 (Figure 2A) that is received by the electronic control unit 126 via the input 108. The brake trigger signal 200 serves as an input signal representative of brake demand. In this embodiment, the Pressure Control Unit 106 derives electrical power from the brake trigger signal 200.

The electronic control unit 126 processes the brake trigger signal 200 using a suitable control algorithm stored in the electronic control unit 126 to generate a brake electrical control signal 202 (Figure 2B) that is received by the Pressure Control Servovalve 128. Upon receiving the electrical control signal 202, the Pressure Control Servovalve 128 actuates in accordance with the electrical control signal 202 to control the pressure of the hydraulic fluid supplied to the brake system hydraulic line 113 via the output port 112. The pressure profile applied to the system hydraulic line 113 follows a predetermined pressure vs. electrical input signal profile 204 (Figure 2C) of the Pressure Control Servovalve 128 to yield a brake pressure 206 (Figure 2D).

The electronic control unit 126 is programmed so that, irrespective of the brake demand made by the pilot, the translation of the brake demand by the pilot into the brake pressure 206 is overridden, when necessary, to avoid the profile of the brake pressure 206 deviating outside or crossing one or more thresholds corresponding to predetermined pressure profile limits determined according to mechanical parameters of the airframe of the aircraft to which the braking system 100 is fitted.

Consequently, the brake assemblies 122 effect braking to slow the aircraft within acceptable mechanical parameters of the airframe of the aircraft, thereby avoiding compromising integrity of the airframe.

If desired, the profile of the electrical control signal 202, and hence the profile of the brake pressure 206, can be easily modified by re-programming the electronic control unit 126 and/or modifying at least one component of the electronic control unit 126.

It will be appreciated that as compared with the above described hydro-mechanical arrangement employing a restrictor and an accumulator, an aircraft hydraulic fluid control apparatus having reduced complexity of mechanical components that can deliver a required progressive increase in pressure up to a defined maximum pressure is provided. Additionally, by generating a progressive increase in pressure and maximum pressure limit

## Claims

1. An aircraft braking system hydraulic fluid control apparatus (100) for replacing a pressure reducing valve of an aircraft braking system, the apparatus (100) comprising:
electrical control circuitry (106) for receiving an input signal (200) representative of a brake demand and generating an electrical control signal in response thereto; and
means (11,2) for variably controlling a hydraulic output in response to the electrical control signal, the means (112) for variably controlling a hydraulic output being coupled to the electrical control circuitry (106) for receiving said electrical control signal,
**characterised in that** said electrical control circuitry (106) is operable to generate a pre-programmed electrical control signal profile (202) according to airframe properties of an aircraft to which, in use, the apparatus is fitted irrespective of said input signal (200) to cause said means (112) for variably controlling a hydraulic output to provide a predetermined hydraulic output profile when a hydraulic output corresponding to said brake demand would exceed one or more thresholds corresponding to predetermined pressure profile limits associated with said airframe properties.

2. An apparatus as claimed in Claim 1, wherein said electrical control circuitry (106) comprises an electronic control unit (126).

3. An apparatus as claimed in Claim 2, wherein said electronic control unit (126) is a programmable processing unit, whereby the electrical control signals generated are configurable by reprogramming the processing unit such that the hydraulic output from the means (112) for variably controlling a hydraulic output can be adjusted by reprogramming the processing unit.

4. An apparatus as claimed in any one of the preceding claims, wherein at least one of the control circuitry and the means (112) for variably controlling a hydraulic output is powered by the input signal.

5. An apparatus as claimed in any one of the preceding claims, wherein the means (112) for variably controlling a hydraulic output is a servovalve.

6. An apparatus as claimed in any one of the preceding claims, wherein the means (112) for variably controlling a hydraulic output is arranged to control, when in use, at least one of hydraulic pressure and hydraulic flow.

7. An aircraft braking system comprising an aircraft braking system hydraulic fluid control apparatus as claimed in any one of the preceding claims.

8. An aircraft comprising an aircraft braking system as claimed in Claim 7.

9. A method of upgrading an aircraft braking system having a pressure reducing valve, the method comprising:
coupling a means for variably controlling a hydraulic output in response to an electrical control signal between a source of hydraulic fluid under pressure and a braking assembly of an aircraft braking system, the means for variably controlling a hydraulic output being provided in place of said pressure reducing valve;
providing electrical control circuitry for receiving, when in use, an input signal representative of a brake demand and generating a pre-programmed electrical control signal profile in response thereto; and
coupling the electrical control circuitry to the means for variably controlling a hydraulic output, such that the means for variably controlling a hydraulic output is arranged to control, when in use, supply from the source of hydraulic fluid in response to the pre-programmed electrical control signal profile from said electrical control circuitry.

10. A method as claimed in Claim 9, wherein said electrical control circuitry comprises a programmable processing unit and further comprising programming said programmable processing unit to generate electrical control signals that will cause the means for variably controlling a hydraulic output to control supply from the source of hydraulic fluid to provide pressure profiles that are within a predetermined pressure profile limit acceptable to an airframe of an aircraft to which the braking system is fitted even when the brake demand is for a pressure profile exceeding said predetermined pressure limit.

11. A method as claimed in Claim 10, wherein said programming comprises providing a pressure profile having a characteristic ramp rate acceptable to the airframe.

12. A method as claimed in Claim 10 or 11, wherein said programming comprises providing a pressure profile having a maximum pressure acceptable to the airframe.

## Patentansprüche

1. Flugzeugbremssystem-Hydraulikfluid-Steuervorrichtung (100) zum Ersetzen eines Druckminderventils eines Flugzeugbremssystems, wobei die Vorrichtung (100) umfasst:
eine elektrische Steuerschaltungsanordnung (106) zum Empfangen eines Eingangssignals (200), das eine Bremsaufforderung repräsentiert, und zum Erzeugen eines elektrischen Steuersignals in Reaktion darauf; und
ein Mittel (112) zum variablen Steuern einer Hydraulik-Ausgangsleistung in Reaktion auf das elektrische Steuersignal, wobei das Mittel (112) zum variablen Steuern einer Hydraulik-Ausgangsleistung mit der elektrischen Steuerschaltungsanordnung (106) gekoppelt ist, um das elektrische Steuersignal zu empfangen,
**dadurch gekennzeichnet, dass** die elektrische Steuerschaltungsanordnung (106) so betreibbar ist, dass sie gemäß den Flugwerkeigenschaften eines Flugzeugs, in das, wenn es in Betrieb ist, die Vorrichtung eingebaut ist, unabhängig von dem Eingangssignal (200) ein vorprogrammiertes elektrisches Steuersignalprofil (202) erzeugt, um zu veranlassen, dass das Mittel (112) zum variablen Steuern einer Hydraulik-Ausgangsleistung ein vorgegebenes Hydraulik-Ausgangsleistungsprofil bereitstellt, wenn eine Hydraulik-Ausgangsleistung, die der Bremsaufforderung entspricht, einen oder mehrere Schwellenwerte, die vorgegebenen Druckprofilgrenzwerten entsprechen, die den Flugwerkeigenschaften zugeordnet sind, übersteigen würde.

2. Vorrichtung gemäß Anspruch 1, worin die elektrische Steuerschaltungsanordnung (106) eine elektronische Steuereinheit (126) umfasst.

3. Vorrichtung gemäß Anspruch 2, worin die elektronische Steuereinheit (126) eine programmierbare Verarbeitungseinheit ist, wobei die erzeugten elektrischen Steuersignale dadurch konfigurierbar sind, dass die Verarbeitungseinheit so umprogrammiert wird, dass die Hydraulik-Ausgangsleistung von dem Mittel (112) zum variablen Steuern einer Hydraulik-Ausgangsleistung durch Umprogrammieren der Verarbeitungseinheit eingestellt werden kann.

4. Vorrichtung gemäß einem der vorhergehenden Ansprüche, worin die Steuerschaltungsanordnung und/oder das Mittel (112) zum variablen Steuern einer Hydraulik-Ausgangsleistung durch das Eingangssignal mit Leistung versorgt werden.

5. Vorrichtung gemäß einem der vorhergehenden Ansprüche, worin das Mittel (112) zum variablen Steuern einer Hydraulik-Ausgangsleistung ein Servoventil ist.

6. Vorrichtung gemäß einem der vorhergehenden Ansprüche, worin das Mittel (112) zum variablen Steuern einer Hydraulik-Ausgangsleistung so angeordnet ist, dass es, wenn es in Betrieb ist, den Hydraulikdruck und/oder den Hydraulikstrom steuert.

7. Flugzeugbremssystem, das eine Flugzeugbremssystem-Hydraulikfluid-Steuervorrichtung gemäß einem der vorhergehenden Ansprüche umfasst.

8. Flugzeug, das ein Flugzeugbremssystem gemäß Anspruch 7 umfasst.

9. Verfahren zum Verbessern eines Flugzeugbremssystems mit einem Druckminderventil, wobei das Verfahren folgende Schritte umfasst:
das Koppeln eines Mittels zum variablen Steuern einer Hydraulik-Ausgangsleistung in Reaktion auf ein elektrisches Steuersignal zwischen eine Quelle von Hydraulikfluid unter Druck und einer Bremsbaueinheit eines Flugzeugbremssystems, wobei das Mittel zum variablen Steuern einer Hydraulik-Ausgangsleistung anstelle des Druckminderventils bereitgestellt wird:
das Bereitstellen einer elektrischen Steuerschaltungsanordnung zum Empfangen, wenn sie in Betrieb ist, eines Eingangssignals, das eine Bremsaufforderung repräsentiert, und zum Erzeugen eines vorprogrammierten elektrischen Steuersignalprofils in Reaktion darauf; und
das Koppeln der elektrischen Steuerschaltungsanordnung mit dem Mittel zum variablen Steuern einer Hydraulik-Ausgangsleistung in der Weise, dass das Mittel zum variablen Steuern einer Hydraulik-Ausgangsleistung so angeordnet wird, dass es, wenn es in Betrieb ist, die Zufuhr von der Quelle des Hydraulikfluids in Reaktion auf das vorprogrammierte elektrische Steuersignalprofil von der elektrischen Steuerschaltungsanordnung steuert.

10. Verfahren gemäß Anspruch 9, worin die elektrische Steuerschaltungsanordnung eine programmierbare Verarbeitungseinheit umfasst und ferner das Programmieren der programmierbaren Verarbeitungseinheit in der Weise umfasst, dass elektrische Steuersignale erzeugt werden, die veranlassen, dass das Mittel zum variablen Steuern einer Hydraulik-Ausgangsleistung die Zufuhr von der Quelle des Hydraulikfluids in der Weise steuert, dass Druckprofile bereitgestellt werden, die innerhalb eines vorgegebenen Druckprofilgrenzwerts für ein Flugwerk eines Flugzeugs, in welches das Bremssystem eingebaut ist, selbst dann akzeptabel sind, wenn die Bremsaufforderung ein Druckprofil betrifft, das den vorgegebenen Druckgrenzwert übersteigt.

11. Verfahren gemäß Anspruch 10, worin das Programmieren das Bereitstellen eines Druckprofils mit einer charakteristischen Anstiegsrate umfasst, die für das Flugwerk akzeptabel ist.

12. Verfahren gemäß Anspruch 10 oder 11, worin das Programmieren das Bereitstellen eines Druckprofils mit einem Maximaldruck umfasst, der für das Flugwerk akzeptabel ist.

## Revendications

1. Appareil de commande à fluide hydraulique (100) d'un système de freinage pour aéronef, destiné à remplacer un détendeur d'un système de freinage pour aéronef, l'appareil (100) comprenant :
un circuit de commande électrique (106) destiné à recevoir un signal d'entrée (200) représentant une demande de freinage et à produire un signal de commande électrique en réponse à celui-ci ; et
des moyens (112) destinés à commander de façon variable une puissance hydraulique en réponse au signal de commande électrique, les moyens (112) de commande variable de la puissance hydraulique étant raccordés au circuit de commande électrique (106) destiné à recevoir ledit signal de commande électrique,
**caractérisé en ce que** ledit circuit de commande électrique (106) peut être utilisé pour produire un profil de signal de commande électrique préprogrammé (202) selon les propriétés de cellule d'un aéronef sur lequel, en service, l'appareil est monté, indépendamment dudit signal d'entrée (200) pour amener lesdits moyens (112) de commande variable de la puissance hydraulique à fournir un profil de puissance hydraulique prédéterminé lorsqu'une puissance hydraulique correspondant à ladite demande de freinage dépasse un ou plusieurs seuils correspondant à des limites de profil de pression prédéterminées associées auxdites propriétés de cellule.

2. Appareil selon la revendication 1, ledit circuit de commande électrique (106) comprenant une unité de commande électronique (126).

3. Appareil selon la revendication 2, ladite unité de commande électronique (126) étant une unité de traitement programmable, moyennant quoi les signaux de commande électriques produits peuvent être configurés par reprogrammation de l'unité de traitement afin que la puissance hydraulique issue des moyens (112) de commande variable de la puissance hydraulique puisse être réglée par reprogrammation de l'unité de traitement.

4. Appareil selon l'une quelconque des revendications précédentes, au moins soit le circuit de commande, soit les moyens (112) de commande variable de la puissance hydraulique étant activés par le signal d'entrée.

5. Appareil selon l'une quelconque des revendications précédentes, les moyens (112) de commande variable de la puissance hydraulique étant un servo-distributeur.

6. Appareil selon l'une quelconque des revendications précédentes, les moyens (112) de commande variable de la puissance hydraulique étant conçus pour commander, en service, au moins soit une pression hydraulique, soit un débit hydraulique.

7. Système de freinage pour aéronef, comprenant un appareil de commande à fluide hydraulique de système de freinage pour aéronef selon l'une quelconque des revendications précédentes.

8. Aéronef comprenant un système de freinage pour aéronef selon la revendication 7.

9. Procédé d'amélioration d'un système de freinage pour aéronef ayant un détendeur, le procédé consistant à :
raccorder des moyens de commande variable de la puissance hydraulique en réponse à un signal de commande électrique entre une source de fluide hydraulique sous pression et un ensemble de freinage d'un système de freinage pour aéronef, les moyens de commande variable de la puissance hydraulique étant prévus à la place dudit détendeur ;
fournir un circuit de commande électrique destiné à recevoir, en service, un signal d'entrée représentant une demande de freinage et à produire un profil de signal de commande électrique préprogrammé en réponse à celui-ci ; et
raccorder le circuit de commande électrique aux moyens de commande variable de la puissance hydraulique, afin que les moyens de commande variable de la puissance hydraulique soient conçus pour commander, en service, une alimentation par la source de fluide hydraulique en réponse au profil de signal de commande électrique préprogrammé issu dudit circuit de commande électrique.

10. Procédé selon la revendication 9, ledit circuit de commande électrique comprenant une unité de traitement programmable, et consistant en outre à programmer ladite unité de traitement programmable pour produire des signaux de commande électriques qui amèneront les moyens de commande variable de la puissance hydraulique à commander l'alimentation par la source de fluide hydraulique pour fournir des profils de pression qui sont dans une limite de profil de pression prédéterminée acceptable pour la cellule d'un aéronef sur lequel le système de freinage est monté, même lorsque la demande de freinage est pour un profil de pression dépassant ladite limite de pression prédéterminée.

11. Procédé selon la revendication 10, ladite programmation consistant à fournir un profil de pression ayant une vitesse de montée caractéristique acceptable pour la cellule.

12. Procédé selon la revendication 10 ou 11, ladite programmation consistant à fournir un profil de pression ayant une pression maximale acceptable pour la cellule.
